# EUROPÄISCHE PATENTSCHRIFT

(11) **EP 2 700 117 B1**
(45) Veröffentlichungstag und Bekanntmachung des Hinweises auf die Patenterteilung: **13.04.2016**
(21) Anmeldenummer: 12706556.3
(22) Anmeldetag: 27.02.2012
(51) Int. Cl.: H01M 2/16, H01M 2/14, H01M 10/0525

(54) **SEPARATOR MIT ADDITIV ZUR VERBESSERUNG DER BESCHICHTUNGSGÜTE UND REDUZIERUNG VON AGGLOMERATEN IM KERAMISCHEN KOMPOSITMATERIAL**
SEPARATOR WITH ADDITIVE FOR IMPROVING COATING QUALITY AND REDUCING AGGLOMERATES IN CERAMIC COMPOSITE MATERIAL
SÉPARATEUR COMPORTANT UN ADDITIF DESTINÉ À AMÉLIORER LA QUALITÉ DE REVÊTEMENT ET À RÉDUIRE LES AGGLOMÉRATS DANS LE MATÉRIAU CÉRAMIQUE COMPOSITE

(30) Priorität: 20.04.2011 DE 102011007750
(43) Veröffentlichungstag der Anmeldung: 26.02.2014
(73) Patentinhaber: Litarion GmbH, 01917 Kamenz (DE)
(72) Erfinder: PASCALY, Matthias, 60596 Frankfurt (DE); TERWONNE, Rolf-Walter, 45772 Marl (DE); HYING, Christian, 46414 Rhede (DE); HAHN, Henrik, 01099 Dresden (DE)
(74) Vertreter: Tostmann, Holger Carl
(86) Internationale Anmeldenummer: PCT/EP2012/053278
(87) Internationale Veröffentlichungsnummer: WO 2012/143158

(56) Entgegenhaltungen:
- EP-A1- 1 553 644
- WO-A1-99/15262
- WO-A1-03/072232
- WO-A1-2007/028662
- WO-A1-2010/143677
- KR-A- 20010 073 589
- KR-A- 20080 066 309

## Beschreibung

Die vorliegende Erfindung betrifft einen Separator mit Additiv zur Verbesserung der Beschichtungsgüte, ein Verfahren zur Herstellung eines solchen Separators sowie eine elektrochemische Zelle, die einen solchen Separator umfasst.

Herkömmlicherweise ist ein Separator ein dünner, poröser, elektrisch isolierender Stoff mit hoher lonendurchlässigkeit, guter mechanischer Festigkeit und Langzeitstabilität gegen die im System, z. B. im Elektrolyten der elektrochemischen Zelle, verwendeten Chemikalien und Lösemittel. Er soll in elektrochemischen Zellen die Kathode von der Anode elektronisch völlig isolieren. Außerdem muss er dauerelastisch sein und den Bewegungen im System, z. B. im Elektrodenpaket beim Laden und Entladen, folgen.

Der Separator bestimmt maßgeblich die Lebensdauer der elektrochemischen Zelle. Die Entwicklung wiederaufladbarer elektrochemischer Zellen oder Batterien wird daher durch die Entwicklung geeigneter Separatormaterialien beeinflusst. Allgemeine Informationen über elektrische Separatoren und Batterien können z. B. bei J.O. Besenhard in "Handbook of Battery Materials" (VCH-Verlag, Weinheim 1999) nachgelesen werden. Ein spezieller Separator ist in der WO 03/072232 offenbart. Die dort beschriebene Hybridmembrane besteht aus einer keramischen Trägeschicht, die auf einem Polymerfasern aufweisenden Träger aufgebracht ist, und einer organischen selektiv trennenden Schicht. Gemäß der Lehre der WO 03/072232 konnen die Trenneigenschaften der Membrane gezielt durch Variation der Polymere bzw. der Behandlungsweise der Polymerwerkstoffe bzw. die Herstellbedingungen der polymeren selektiven Trennschicht eingestellt werden.

Die Herstellung von keramischen Beschichtungen auf einem Vlies, zum Beispiel einem Polyethylenterephtalat (PET) Vlies, erfolgt in einem Rolle-zu-Rolle Verfahren. Für die Herstellung wird keramischer Schlicker, der Aluminiumoxid, Siliciumdioxid und Silanen in Wasser dispergiert enthält, auf dem Vlies kontinuierlich beschichtet. Aus verschiedenen Gründen kann die Beschichtung Fehler aufweisen, die sich als helle Flecken im beschichteten Produkt bemerkbar machen und die mittels Videokontrolle detektiert werden können. Die Fehler in der Beschichtung bestehen zum einen darin, dass bei der Dispergierung der Keramik nicht alle Partikel auf ein Maß von weniger als 2 µm zerkleinert werden. Solche zu großen Partikel werden im Endprodukt als Flecken registriert, die der Fachmann kennt. Außerdem kann es durch gelegentliche Einrührung von Luft, sowohl während der Dispergierung als auch während des Beschichtungsprozesses an den entsprechenden Beschichtungswalzen, zu unerwünschten Flecken kommen. Auch mit dem keramischen Schlicker nicht verträgliche Verunreinigungen, z.B. Silicone, Fette, oder Öle, können Flecken hervorrufen. Solche Fehler in der Beschichtung kennt der Fachmann als sogenannte "Benetzungsfehler".

Die Fehler in der Beschichtung und Benetzungsfehler erschweren die Anwendung der Separatormaterialien in Hochleistungsbatteriesystemen, denn sie erschweren die Kontrolle der Porosität des Separators, von der wiederum der Innenwiderstand abhängt. Außerdem stören sie die Benetzbarkeit des Separators mit Elektrolyten, so dass nicht benetzte Totzonen entstehen.

Aufgabe der vorliegenden Erfindung war es deshalb, einen Separator bereitzustellen, der weniger Fehler in der Beschichtung aufweist, als Separatoren des Standes der Technik.

Überraschenderweise wurde gefunden, dass ein Separator, der auf einem Substrat und in den Zwischenräumen des Substrats mit Fasern aus einem elektrisch nicht leitendem Material eine poröse, nicht elektrisch leitfähige Beschichtung aus durch einen anorganischen Kleber miteinander und mit dem Substrat verklebten Oxidpartikeln, die zumindest ein Oxid, ausgewählt aus Al₂O₃, SiO₂ aufweisen, aufweist, und in der keramischen Beschichtung zumindest ein Zucker in Übereinstimmung mit Anspruch 1 vorhanden ist, deutlich weniger Fehler in der Beschichtung aufweist.

Gegenstand der vorliegenden Erfindung ist deshalb ein Separator zur Verwendung in einer Batterie, der auf einem Substrat und in den Zwischenräumen des Substrats, welches Fasern aus einem elektrisch nicht leitendem Material aufweist, eine poröse, nicht elektrisch leitfähige Beschichtung aus durch einen anorganischen Kleber miteinander und mit dem Substrat verklebten Oxidpartikeln, die zumindest ein Oxid, ausgewählt aus Al₂O₃, SiO₂ aufweisen, aufweist, dadurch gekennzeichnet, dass in der keramischen Beschichtung zumindest ein Zucker vorhanden ist, wobei der Zucker ausgewählt ist aus Polyhydroxyaldehyden, Polyhydroxyketonen, linearen oder zyklischen Monosacchariden, linearen oder zyklischen Polysacohariden.

Ebenso ist Gegenstand der vorliegenden Erfindung ein Verfahren zur Herstellung eines erfindungsgemäßen Separators, dadurch gekennzeichnet, dass ein Substrat, welches Fasern aus einem elektrisch nicht leitenden Material und Zwischenräume zwischen den Fasern aufweist, mit einer keramischen Beschichtung versehen wird, wofür auf und in das Substrat eine Suspension aufgebracht wird und diese durch zumindest einmaliges Erwärmen auf und im Substrat verfestigt wird, wobei die Suspension ein Sol, enthaltend in dem Sol dispergierte Oxidpartikel, ausgewählt aus den Oxiden der Elemente Al und/oder Si, zumindest ein Silan, zumindest ein Dispersionsmittel, und zumindest einen Zucker aufweist, wobei der Zucker ausgewählt ist aus Polyhydroxyaldehyden, Polyhydroxyketonen, linearen oder zylischen Monosacchariden, linearen oder zyklischen Polysacchariden.

Außerdem ist Gegenstand der vorliegenden Erfindung die Verwendung eines erfindungsgemäßen Separators als Separator in Batterien sowie Lithiumionen- Batterien, die einen erfindungsgemäßen Separator aufweisen, und Traktionssysteme, die solche Batterien aufweisen.

Unter Zucker werden im Rahmen der Erfindung organische Verbindungen , Polyhydroxyaldehyde , Polyhydroxyketone sowie Monosaccharide als auch Polysaccharide, linear oder cyclisch, verstanden.

Der erfindungsgemäße Separator hat den Vorteil, dass er gegenüber handelsüblichen keramischen Separatoren eine geringere Anzahl Fehler pro Fläche aufweist. Unter Fehler werden Fehler in der Beschichtung verstanden. Die mittlere Häufigkeit von Fehlern beim erfindungsgemäßen Separator ist typischerweise nur etwa halb so groß, wie bei Stand der Technik gemäßen Separatoren. Außerdem ist die Oberfläche des erfindungsgemäßen Separators besonders glatt.

In einer elektrochemischen Zelle zeigt der erfindungsgemäße Separator ein deutlich besseres Zykelverhalten. Dies ist ein weiterer Vorteil der Erfindung.

Nachfolgend werden der erfindungsgemäße Separator und das erfindungsgemäße Verfahren beispielhaft beschrieben.

Der erfindungsgemäße Separator zeichnet sich dadurch aus, dass in der keramischen Beschichtung zumindest ein Zucker gemäß Anspruch 1 vorhanden ist.

Als Zucker kann vorzugsweise zyklischer Zucker, der von 6 bis 8 Glucoseeinheiten umfasst, bevorzugt Cyclodextrin, in dem erfindungsgemäßen Separator vorhanden sein.

Der erfindungsgemäße Separator weist auf zumindest einer Seite vorzugsweise eine Anzahl Fehler von höchstens 4,5 m² auf.

Der erfindungsgemäße Separator weist bevorzugt Oxidpartikel auf, die eine mittlere Partikelgröße aufweisen, die kleiner ist als das 0,5fache, vorzugsweise kleiner als das 0,2fache und bevorzugt kleiner als das 0,1fache der Dicke des Separators.

Die mittlere Partikelgröße der Oxidpartikel kann mittels Laserkleinwinkelstreuung bei der Herstellung des Separators bestimmt werden. Am fertigen Separator kann die Partikelgröße der Polymerpartikel und der Oxidpartikel durch die Betrachtung mittels Raster-Elektronen-Mikroskop bestimmt werden.

Bevorzugt weisen die erfindungsgemäßen Separatoren Substrate auf, die flexibel sind und bevorzugt eine Dicke von weniger als 50 µm aufweisen. Durch die Flexibilität des Substrats wird gewährleistet, dass auch der erfindungsgemäße Separator flexibel sein kann. Solche flexiblen Separatoren sind dann insbesondere zur Herstellung von sogenannten Wickelzellen einsetzbar. Die Substrate weisen Zwischenräume auf. Insbesondere weisen die Substrate Zwischenräume die Poren darstellen auf, also Zwischenräume die in direkter oder indirekter Linie einen Durchtritt von Materie von einer Seite des Substrats zur anderen Seite ermöglichen.

Die Dicke des Substrats hat einen großen Einfluss auf die Eigenschaften des Separators, da zum einen die Flexibilität aber auch der Flächenwiderstand des mit Elektrolyt getränkten Separators von der Dicke des Substrats abhängig ist. Bevorzugt weist der erfindungsgemäße Separator deshalb Substrate auf, die eine Dicke von kleiner 30 µm, besonders bevorzugt kleiner 20 µm aufweisen. Um eine ausreichend hohe Leistungsfähigkeit der Batterien, insbesondere bei Lithiumionenbatterien erreichen zu können, hat es sich als vorteilhaft erwiesen, wenn der erfindungsgemäße Separator ein Substrat aufweist, das vorzugsweise eine Porosität von größer 40 %, bevorzugt von 50 bis 97 %, besonders bevorzugt von 60 bis 90 % und ganz besonders bevorzugt von 70 bis 90 % aufweist. Die Porosität ist dabei definiert als das Volumen des Substrats (100 %) minus dem Volumen der Fasern des Substrats, also dem Anteil am Volumen des Substrats, der nicht von Material ausgefüllt wird. Das Volumen des Substrats kann dabei aus den Abmessungen des Substrats berechnet werden. Das Volumen der Fasern ergibt sich aus dem gemessenen Gewicht des betrachteten Vlieses und der Dichte der Fasern. In einer besonders bevorzugten Ausführungsform des erfindungsgemäßen Separators ist das Substrat ein Vlies mit einer mittleren Porenweite von 5 bis 500 µm, vorzugsweise 10 bis 200 µm.

Das Substrat kann als nicht elektrisch leitfähige Fasern gewebte oder ungewebte Fasern von Polymeren, Naturfasern, Kohlenstofffasern, Glasfasern oder Keramikfasern aufweisen. Das Substrat weist vorzugsweise gewebte oder ungewebte Polymerfasern auf. Besonders bevorzugt weist das Substrat ein Polymergewebe oder -vlies auf bzw. ist ein solches Gewebe oder Vlies. Als Polymerfasern weist das Substrat vorzugsweise nicht elektrisch leitfähige Fasern von Polymeren auf, die vorzugsweise ausgewählt sind aus Polyacrylnitril (PAN), Polyamid, (PA), Polyester, wie z. B. Polyethylenterephthalat (PET) und/oder Polyolefin (PO), wie z. B. Polypropylen (PP) oder Polyethylen (PE) oder Mischungen solcher Polyolefine. Wenn das durchbrochene Substrat Polymerfasern umfasst, können aber auch andere als die oben genannten Polymerfasern eingesetzt werden, sofern sie sowohl die für die Herstellung der Separatoren erforderliche Temperaturstabilität aufweisen als auch unter den Betriebsbedingungen in einer elektrochemischen Zelle, vorzugsweise in einer Lithiumionen-Batterie, stabil sind. Bei einer bevorzugten Ausführungsform weist der erfindungsgemäße Separator Polymerfasern auf, die eine Erweichungstemperatur von größer 100 °C und eine Schmelztemperatur von größer 110 °C aufweisen.

Das Substrat kann Fasern und/oder Filamente mit einem Durchmesser von 0,1 bis 150 µm, vorzugsweise 1 bis 20 µm, und/oder Fäden mit einem Durchmesser von 1,5 bis 15 µm, vorzugsweise 2,5 bis 7,5 µm, umfassen. Weist das Substrat Polymerfasern auf, so weisen diese vorzugsweise einen Durchmesser von 0,1 bis 10 µm, besonders bevorzugt von 1 bis 5 µm auf. Besonders bevorzugte Vliese, insbesondere Polymervliese, weisen ein Flächengewicht von kleiner 20 g/m², vorzugsweise von 5 bis 15 g/m² auf. Auf diese Weise wird eine besonders geringe Dicke und hohe Flexibilität des Substrats gewährleistet.

Besonders bevorzugt weist der erfindungsgemäße Separator ein Polymervlies als Substrat auf, welches eine Dicke von kleiner 30 µm, vorzugsweise mit einer Dicke von 10 bis 20 µm aufweist. Besonders wichtig für die Verwendung in einem erfindungsgemäßen Separator ist eine möglichst homogene Porenradienverteilung im Vlies. Eine möglichst homogene Porenradienverteilung im Vlies führt in Verbindung mit optimal abgestimmten Oxid-Partikeln bestimmter Größe zu einer optimierten Porosität des erfindungsgemäßen Separators.

Der anorganische Kleber in dem erfindungsgemäßen Separator ist bevorzugt ausgewählt aus Oxiden der Elemente Al, Si und/oder Zr. Der anorganische Kleber kann dabei Partikel mit einer mittleren Partikelgröße von kleiner 20 nm aufweisen und über ein partikuläres Sol hergestellt worden sein oder ein anorganisches Netzwerk der Oxide aufweisen, das über ein polymeres Sol hergestellt wurde.

Es kann vorteilhaft sein, wenn der erfindungsgemäße Separator zusätzlich ein anorganisches, Silizium aufweisendes Netzwerk aufweist, wobei das Silizium des Netzwerks über Sauerstoffatome an die Oxide der anorganischen Beschichtung und über einen organischen Rest an das Substrat, der Polymerfasern aufweist, gebunden ist. Ein solches Netzwerk kann z. B. erhalten werden, wenn bei der Herstellung des Separators ein Haftvermittler, z. B. auf Silan-Basis, eingesetzt wird und dieser Haftvermittler der bei der Herstellung üblichen thermischen Behandlung unterzogen wird.

Besonders bevorzugt weist die auf und in dem Substrat vorhandene poröse, elektrisch isolierende Beschichtung eine mittlere Porengröße im Bereich von 50 nm bis 5 µm und bevorzugt von 100 bis 1000 nm auf.

Die Haltbarkeit des Separators gegenüber Wärmeeinwirkung und damit auch die Sicherheit des Separators werden maßgeblich durch die Oxidpartikel der Beschichtung und ihre geringe Anzahl Fehler in der Beschichtung bestimmt. Außerdem wird die Porengröße im Wesentlichen durch die Beschichtung bzw. die Partikelgröße der in der Beschichtung vorhandenen Partikel bestimmt und lässt sich somit relativ fein einstellen.

Die erfindungsgemäßen Separatoren lassen sich ohne Beschädigung vorzugsweise auf jeden Radius bis herab zu 100 m, vorzugsweise auf einen Radius von 100 m bis herab zu 50 mm und ganz besonders bevorzugt auf einen Radius von 50 mm bis herab zu 0,5 mm biegen. Die erfindungsgemäßen Separatoren zeichnen sich außerdem dadurch aus, dass sie vorzugsweise eine Reißfestigkeit von mindestens 1 N/cm, bevorzugt von mindestens 3 N/cm und ganz besonders bevorzugt von größer 5 N/cm aufweisen. Die hohe Reißfestigkeit und die gute Biegbarkeit des erfindungsgemäßen Separators hat den Vorteil, dass beim Laden und Entladen einer Batterie auftretende Veränderungen der Geometrien der Elektroden durch den Separator mitgemacht werden können, ohne dass dieser beschädigt wird. Die Biegbarkeit hat zudem den Vorteil, dass mit diesem Separator kommerziell standardisierte Wickelzellen produziert werden können. Bei diesen Zellen werden die Elektroden/Separator-Lagen in standardisierter Größe miteinander spiralförmig aufgewickelt und kontaktiert.

Vorzugsweise weist der erfindungsgemäße Separator eine Porosität von 30 bis 80 % auf. Die Porosität bezieht sich dabei auf die erreichbaren, also offenen Poren. Die Porosität kann dabei mittels der bekannten Methode der Quecksilber-Porosimetrie (in Anlehnung an DIN 66 133) bestimmt werden oder kann aus dem Volumen und der Dichte der verwendeten Einsatzstoffe errechnet werden, wenn davon ausgegangen wird, dass nur offene Poren vorliegen.

Die erfindungsgemäßen Separatoren weisen vorzugsweise eine Dicke von kleiner 50 µm, bevorzugt kleiner 40 µm, besonders bevorzugt eine Dicke von 5 bis 30 µm und ganz besonders bevorzugt eine Dicke von 10 bis 20 µm auf. Die Dicke des Separators hat einen großen Einfluss auf die Eigenschaften des Separators, da zum einen die Flexibilität zum anderen aber auch der Flächenwiderstand des mit Elektrolyt getränkten Separators von der Dicke des Separators abhängig ist. Durch die geringe Dicke wird ein besonders geringer elektrischer Widerstand des Separators in der Anwendung mit einem Elektrolyten erzielt. Der Separator selbst weist natürlich einen sehr hohen elektrischen Widerstand auf, da er selbst isolierende Eigenschaften aufweisen muss. Zudem erlauben dünnere Separatoren eine erhöhte Packungsdichte in einem Batteriestapel, so dass man im gleichen Volumen eine größere Energiemenge speichern kann.

Der Separator der vorliegenden Erfindung ist aufgrund seiner erfindungsgemäßen Ausgestaltung hervorragend geeignet für elektrochemische Zellen mit hoher Kapazität und hoher Energiedichte. Insbesondere ist der erfindungsgemäße Separator für elektrochemische Zellen geeignet, die auf der Übertragung von Alkali- und/oder Erdalkali-Metall-Ionen beruhen, wie z. B. Lithium-Metall- und Lithium-Ionen-Batterien. Daher ist es vorteilhaft, wenn diese Separatoren auch die für diese Anwendungen spezifischen Schutzmaßnahmen, wie die Unterbrechungseigenschaft und Kurzschlusseigenschaft mit hoher Kurzschlusstemperatur zeigen. Unter Unterbrechungseigenschaft oder Abschaltung ("shut-down") ist eine Maßnahme zu verstehen, bei der dem Separator für bestimmte Betriebstemperaturen auszusuchende und leicht schmelzende Stoffe, wie zum Beispiel thermoplastische Kunststoffe, einverleibt sein können. Bei einem Ansteigen der Betriebstemperatur durch Störungen wie Überladung, äußere oder innere Kurzschlüsse, können solche leicht schmelzenden Stoffe schmelzen und die Poren des Separators verstopfen. Somit wird der Ionenfluss durch den Separator teilweise oder vollständig blockiert und ein weiteres Ansteigen der Temperatur wird verhindert. Kurzschlusseigenschaft oder Zusammenbruch ("melt-down") bedeutet, dass der Separator bei einer Kurzschlusstemperatur vollständig schmilzt. Dann kann es zwischen großen Flächen der Elektroden einer elektrochemischen Zelle zu einem Kontakt und einem Kurzschluss kommen. Für einen sicheren Betrieb einer elektrochemischen Zelle mit hoher Kapazität und Energiedichte ist eine möglichst hohe Kurzschlusstemperatur wünschenswert. Der erfindungsgemäße Separator weist dabei einen bedeutenden Vorteil auf. Denn das Keramikmaterial das bei dem Separator der vorliegenden Erfindung an dem durchbrochenen Substrat haftet, besitzt einen Schmelzpunkt, der weit oberhalb des sicherheitsrelevanten Temperaturbereichs für elektrochemische Zellen liegt. Der Separator der vorliegenden Erfindung weist daher eine überragende Sicherheit auf.

Polymerseparatoren bringen beispielsweise die für Lithium-Batterien zur Zeit geforderte Sicherheit, indem sie ab einer bestimmten Temperatur (der Shut-Down-Temperatur, die bei ca. 120 °C liegt) jeglichen Stromtransport durch den Elektrolyten unterbinden. Dies geschieht dadurch, dass bei dieser Temperatur das Porengefiige des Separators zusammenbricht und alle Poren verschlossen werden. Dadurch, dass keine Ionen mehr transportiert werden können, kommt die gefährliche Reaktion, die zur Explosion fuhren kann, zum erliegen. Wird die Zelle aufgrund äußerer Umstände aber weiter erwärmt, so wird bei ca. 150 bis 180 °C die melt-Down-Temperatur überschritten. Ab dieser Temperatur kommt es zum Schmelzen des Separators, wobei dieser sich zusammenzieht. An vielen Stellen in der Batteriezelle kommt es nun zu einem direkten Kontakt zwischen den beiden Elektroden und somit zu einem großflächigem inneren Kurzschluss. Dieser führt zur unkontrollierten Reaktion, die häufig mit einer Explosion der Zelle endet, bzw. der entstehende Druck wird durch ein Überdruckventil (eine Berstscheibe) häufig unter Feuererscheinungen abgebaut.

Im Rahmen der vorliegenden Erfindung kann das flexible, durchbrochene Substrat des Separators Polymerfasern umfassen. Bei diesem hybriden Separator, der im Wesentlichen anorganische Beschichtung und polymeres Substratmaterial aufweist, kommt es zum Shut-Down (Abschaltung) wenn durch die hohe Temperatur das Polymergefüge des Substratmaterials schmilzt und in die Poren der anorganischen Beschichtung eindringt und diese dadurch verschließt. Zum sogenannten Melt-Down (Zusammenbruch) kommt es bei dem erfindungsgemäßen Separator dagegen nicht. Der erfindungsgemäße Separator erfüllt also die Anforderungen nach einer von verschiedenen Batterieherstellern geforderten Sicherheitsabschaltung durch den Shut-Down in den Batteriezellen. Die anorganischen Partikel sorgen dafür, dass es niemals zu einem Melt-Down kommen kann. Somit ist sichergestellt, dass es keine Betriebszustände gibt, in denen ein großflächiger Kurzschluss entstehen kann.

Auch bei einem inneren Kurzschluss, der z. B. durch einen Unfall verursacht wurde, ist der erfindungsgemäße Separator sehr sicher. Würde sich z. B. ein Nagel durch eine Batterie bohren, geschieht je nach Separator folgendes: Der Polymerseparator würde an der Durchdringungsstelle (Ein Kurzschlussstrom fließt über den Nagel und heizt diesen auf) schmelzen und sich zusammenziehen. Dadurch wird die Kurzschlussstelle immer größer und die Reaktion gerät außer Kontrolle. Bei der Ausführungsform mit dem erfindungsgemäßen hybriden Separator schmilzt allenfalls das polymere Substratmaterial, nicht aber das anorganische Material der Beschichtung. Somit läuft die Reaktion im Inneren der Batteriezelle nach einem solchen Unfall sehr viel moderater ab. Eine solche Batterie ist somit deutlich sicherer als eine mit einem Polymerseparator ausgerüstete. Dies kommt vor allem im mobilen Bereich zum Tragen.
Der erfindungsgemäße Separator kann z. B. durch das nachfolgend beschriebene erfindungsgemäße Verfahren erhalten werden. Dieses Verfahren basiert auf dem Verfahren zur Herstellung von Separatoren bzw. Membranen, wie es in WO 99/15262 prinzipiell beschrieben wird.

Das erfindungsgemäße Verfahren zur Herstellung des beanspruchten Separators zeichnet sich dadurch aus, dass ein Substrat, welches Fasern aus einem elektrisch nicht leitenden Material und Zwischenräume zwischen den Fasern aufweist, mit einer keramischen Beschichtung versehen wird, wofür auf und in das Substrat eine Suspension aufgebracht wird und diese durch zumindest einmaliges Erwärmen auf und im Substrat verfestigt wird, wobei die Suspension ein Sol, enthaltend in dem Sol dispergierte Oxidpartikel, ausgewählt aus den Oxiden der Elemente Al und/oder Si, zumindest ein Silan, zumindest ein Dispersionsmittel, und zumindest einen Zucker aufweist.

Als Dispersionsmittel können solche Mittel eingesetzt werden, die zum Beispiel in den Schriften WO 99/15262 oder WO 2007/028662 offenbart sind. Diese werden nicht durch die Zugabe von Zucker beeinflusst.

In dem erfindungsgemäßen Verfahren kann vorteilhaft zyklischer und/oder nicht-zyklischer Zucker eingesetzt werden, der vorzugsweise von 6 bis 8 Glucoseeinheiten aufweist, besonders bevorzugt Cyclodextrin, oder ein Gemisch dieser Zucker eingesetzt werden. Cyclodextrin kann durch eine Alkylierung oder Acylierung hydrophobisiert werden. Dadurch lässt sich der Zucker besser mit den hydrophoben Bestandteilen der Suspension mischen.

Es kann vorteilhaft sein, wenn zumindest eine Oxidpartikelfraktion eingesetzt wird, deren Partikel eine mittlere Partikelgröße von 0,1 bis 10 µm, bevorzugt von 0, 5 bis 5 µm und besonders bevorzugt von 1 bis 3 µm aufweisen. Besonders bevorzugt werden zur Herstellung der Suspension als Oxidpartikel Aluminiumoxidpartikel eingesetzt, die bevorzugt eine mittlere Partikelgröße von 0,5 bis 10 µm, vorzugsweise von 1 bis 4 µm aufweisen. Aluminiumoxid-Partikel im Bereich der bevorzugten Partikelgrößen werden beispielweise von der Firma Martinswerke unter den Bezeichnungen MZS 3 und MZS1 und von der Firma AlCoA unter der Bezeichnung CT3000 SG, CL3000 SG, CT1200 SG, CT800SG und HVA SG angeboten.

In dem erfindungsgemäßen Verfahren kann das Auf- und Einbringen der Suspension auf das Substrat und in die Zwischenräume des Substrats z. B. durch Aufdrucken, Aufpressen, Einpressen Aufrollen, Aufrakeln, Aufstreichen, Tauchen, Spritzen oder Aufgießen erfolgen.

Das eingesetzte Substrat weist vorzugsweise eine Dicke von kleiner 30 µm, bevorzugt kleiner 20 µm und besonders bevorzugt eine Dicke von 10 bis 20 µm auf. Besonders bevorzugt werden als Substrate solche eingesetzt, wie sie bei der Beschreibung des erfindungsgemäßen Separators beschrieben wurden. Das eingesetzte poröse Substrat weist also besonders bevorzugt gewebte oder ungewebte Polymerfasern auf. Besonders bevorzugt wird ein Substrat eingesetzt, das ein Polymergewebe oder -vlies aufweist bzw. ein solches Gewebe oder Vlies ist. Bevorzugt weist das eingesetzte Substrat Polymerfasern auf, die eine Erweichungstemperatur von größer 100 °C und eine Schmelztemperatur von größer 110 °C aufweisen. Es kann vorteilhaft sein, wenn die Polymerfasern einen Durchmesser von 0,1 bis 10 µm, vorzugsweise von 1 bis 5 µm aufweisen. Besonders bevorzugt wird in dem erfindungsgemäßen Verfahren ein Substrat eingesetzt, das Fasern ausgewählt aus Polyacrylnitril, Polyester, Polyamid und/oder Polyolefin aufweist.

Die zur Herstellung der Beschichtung verwendete Suspension weist zumindest Partikel von Al₂O₃, ZrO₂ und/oder SiO₂, zumindest eine Fraktion von Polymerpartikeln und zumindest ein Sol, vorzugsweise ein Sol der Elemente Al, Zr und/oder Si auf, und wird durch Suspendieren der Partikel in zumindest einem dieser Sole hergestellt. Das Suspendieren kann durch intensives Mischen der Komponenten erfolgen.

Es hat sich herausgestellt, dass der Einsatz von handelsüblichen Oxidpartikeln unter Umständen zu unbefriedigenden Ergebnissen führt, da häufig eine sehr breite Korngrößenverteilung vorliegt. Es werden deshalb bevorzugt Metalloxidpartikel eingesetzt, die durch ein herkömmliches Verfahren, wie z. B. Windsichten und Hydroklassieren klassiert wurden. Bevorzugt werden als Oxidpartikel solche Fraktionen eingesetzt, bei denen der Grobkornanteil, welcher bis zu 10 % der Gesamtmenge ausmacht, durch Nasssiebung abgetrennt wurde. Dieser störende Grobkornanteil, der auch durch die bei der Herstellung der Suspension typische Verfahren wie etwa Mahlen (Kugelmühle, Attritormühle, Mörsermühle), Dispergieren (Ultra-Turrax, Ultraschall), Zerreiben oder Zerhacken nicht oder nur sehr schwer zerkleinert werden kann, kann z. B. bestehen aus Aggregaten, harten Agglomeraten, Mahlkugelabrieb. Durch die vorgenannten Maßnahmen wird erreicht, dass die elektrisch nicht leitende Beschichtung eine sehr gleichmäßige Porengrößenverteilung aufweist.

Die folgende Tabelle 1 gibt eine Übersicht, wie sich die Wahl der verschiedenen Aluminiumoxide auf die Porosität und die resultierende Porengröße der jeweiligen porösen anorganischen Beschichtung auswirkt. Zur Ermittlung dieser Daten wurden die entsprechenden Schlicker (Suspensionen oder Dispersionen) hergestellt und als reine Formkörper bei 200 °C getrocknet und verfestigt.

**Tabelle 1: Typische Daten von Keramiken in Abhängigkeit vom eingesetzten Pulvertyp**

| Al₂O₃-Typ | Porosität in % | Mittl. Porengröße in nm |
|---|---|---|
| AlCoA CL3000SG | 51 | 755 |
| AlCoA CT800SG | 53,1 | 820 |
| AlCoA HVA SG | 53,3 | 865 |
| AlCoA CL4400FG | 44,8 | 1015 |
| Martinsw. DN 206 | 42,9 | 1025 |
| Martinsw. MDS 6 | 40,8 | 605 |
| Martinsw. MZS 1 + Martinsw. MZS3=1:1 | 47 | 445 |
| Martinsw. MZS 3 | 48 | 690 |

Unter der mittleren Porengröße und der Porosität ist die mittlere Porengröße und die Porosität zu verstehen, die nach der bekannten Methode der Quecksilber-Porosimetrie bestimmt werden kann, z. B. unter Verwendung eines Porosimeter 4000 von Carlo Erba Instruments. Der Quecksilber-Porosimetrie liegt die Washbum-Gleichung zu Grunde (E. W. Washburn, "Note on a Method of Determining the Distribution of Pore Sizes in a Porous Material", Proc. Natl. Acad. Sci., 7, 115 - 16 (1921)).

In der eingesetzten Suspension beträgt der Massenanteil der suspendierten Komponenten (also der Partikel) vorzugsweise zwischen 10 und 80 %, besonders bevorzugt zwischen 30 und 70 %.

Die Sole können durch Hydrolisieren zumindest einer (Vorläufer-)Verbindung der Elemente Zr, Al und/oder Si erhalten werden. Es kann vorteilhaft sein, die zu hydrolisierende Verbindung vor der Hydrolyse in Alkohol oder eine Säure oder eine Kombination dieser Flüssigkeiten zu geben. Als zu hydrolisierende Verbindung wird vorzugsweise zumindest ein Nitrat, ein Chlorid, ein Carbonat oder eine Alkoholatverbindung der Elemente Zr, Al und/oder Si hydrolisiert. Die Hydrolyse erfolgt vorzugsweise in Gegenwart von Wasser, Wasserdampf, Eis, Alkohol oder einer Säure oder eine Kombination dieser Verbindungen. Vorzugsweise werden die Sole durch Hydrolisieren einer Verbindung der Elemente Al, Zr oder Si mit Wasser oder einer mit Wasser verdünnten Säure erhalten, wobei die Verbindungen bevorzugt gelöst in einem nichtwässrigen, gegebenenfalls auch wasserfreien Lösemittel vorliegen und mit dem 0,1- bis 100fachen Molverhältnis an Wasser hydrolysiert werden.

In einer Ausführungsvariante des Herstellverfahrens für den erfindungsgemäßen Separator werden durch Hydrolyse der zu hydrolisierenden Verbindungen partikuläre Sole hergestellt. Diese partikulären Sole zeichnen sich dadurch aus, dass die in dem Sol durch Hydrolyse entstandenen Verbindungen partikulär vorliegen. Die partikulären Sole können wie oben, wie in WO 99/15262, oder wie in WO 2007/028662 beschrieben hergestellt werden. Diese Sole weisen üblicherweise einen sehr hohen Wassergehalt auf, der bevorzugt größer als 50 Gew.-% ist. Es kann vorteilhaft sein, die zu hydrolysierende Verbindung vor der Hydrolyse in Alkohol oder eine Säure oder eine Kombination dieser Flüssigkeiten zu geben.

Bevorzugt erfolgt bei dem erfindungsgemäßen Verfahren eine Anpassung des Benetzungsverhaltens des Sols bzw. der Suspension. Diese Anpassung erfolgt vorzugsweise durch die Herstellung von polymeren Solen bzw. Suspensionen aus polymeren Solen wobei diese Sole einen oder mehrere Alkohole, wie z. B. Methanol, Ethanol oder Propanol oder Mischungen daraus, umfassen. Es sind aber auch andere Lösemittelgemische denkbar, die dem Sol bzw. der Suspension zugegeben werden können, um diese im Vernetzungsverhalten an das verwendete Vlies anzupassen.

Es wurde festgestellt, dass die grundlegende Änderung des Solsystems und der daraus resultierenden Suspension zu einer deutlichen Verbesserung der Haftungseigenschaften der keramischen Komponenten auf dem und in einem polymeren Vliesmaterial führt. Weiterhin bevorzugt werden Vliese, die Polymerfasern aufweisen, mittels Suspensionen beschichtet, die in einem vorgeschalteten Schritt durch Behandlung mit einem polymeren Sol mit einem Haftvermittler ausgerüstet wurden.

In einer weiteren Ausführungsvariante des Herstellverfahrens für einen erfindungsgemäß einsetzbaren Separator werden durch Hydrolyse der zu hydrolysierenden Verbindungen polymere Sole hergestellt. Diese polymeren Sole zeichnen sich dadurch aus, dass die in dem Sol durch Hydrolyse entstandenen Verbindungen polymer (also kettenförmig über einen größeren Raum vernetzt) vorliegen. Die polymeren Sole weisen üblicherweise weniger als 50 Gew.-%, vorzugsweise sehr viel weniger als 20 Gew.-% an Wasser und/oder wässriger Säure auf. Um auf den bevorzugten Anteil von Wasser und/oder wässriger Säure zu kommen, wird die Hydrolyse vorzugsweise so durchgeführt, dass die zu hydrolysierende Verbindung mit dem 0,5 bis 10fachen Molverhältnis und bevorzugt mit dem halben Molverhältnis Wasser, Wasserdampf oder Eis, bezogen auf die hydrolysierbare Gruppe der hydrolysierbaren Verbindung, hydrolysiert wird. Eine bis zu 10fache Menge an Wasser kann bei sehr langsam hydrolisierenden Verbindungen wie z. B. beim Tetraethoxysilan eingesetzt werden. Sehr schnell hydrolysierende Verbindungen, wie zum Beispiel Zirkoniumtetraethylat, können unter diesen Bedingungen durchaus schon partikuläre Sole bilden, weshalb zur Hydrolyse solcher Verbindungen bevorzugt die 0,5fache Menge an Wasser eingesetzt wird. Eine Hydrolyse mit weniger als der bevorzugten Menge an Wasser, Wasserdampf, oder Eis führt ebenfalls zu guten Ergebnissen. Wobei ein Unterschreiten der bevorzugten Menge von einem halben Molverhältnis um mehr als 50 % möglich aber nicht sehr sinnvoll ist, da beim Unterschreiten dieses Wertes die Hydrolyse nicht mehr vollständig ist und Beschichtungen auf Basis solcher Sole nicht sehr stabil sind.

Zur Herstellung dieser Sole mit dem gewünschten sehr geringen Anteil an Wasser und/oder Säure im Sol kann es vorteilhaft sein, wenn die zu hydrolysierende Verbindung in einem organischen Lösemittel, insbesondere Ethanol, Isopropanol, Butanol, Amylalkohol, Hexan, Cyclohexan, Ethylacetat und oder Mischungen dieser Verbindungen, gelöst wird bevor die eigentliche Hydrolyse vorgenommen wird. Ein so hergestelltes Sol kann zur Herstellung der erfindungsgemäßen Suspension oder als Haftvermittler in einem Vorbehandlungsschritt eingesetzt werden. Besonders bevorzugt wird eine Suspension zur Herstellung des erfindungsgemäßen Separators eingesetzt, der ein polymeres Sol einer Verbindung des Siliziums aufweist.

Sowohl die partikulären Sole als auch die polymeren Sole können als Sol in dem erfindungsgemäßen Verfahren zur Herstellung der Suspension eingesetzt werden. Neben den Solen, die wie gerade beschrieben erhältlich sind, können prinzipiell auch handelsübliche Sole, wie z. B. Zirkoniumnitratsol oder Silicasol eingesetzt werden.

Zur Verbesserung der Haftung der anorganischen Komponenten an Polymerfasern bzw. -vliesen als Substrat, aber auch zur Verbesserung der Haftung einer gegebenenfalls später aufzubringenden Abschaltschicht, kann es vorteilhaft sein, den eingesetzten Suspensionen Haftvermittler, wie z. B. organofunktionelle Silane, wie z. B. die Evonik-Silane GLYMO, GLYEO, MEMO, AMEO, VTEO oder Silfin, beizufügen. Das Beifügen von Haftvermittlern ist dabei bei Suspensionen auf Basis polymerer Sole bevorzugt. Als Haftvermittler sind insbesondere Verbindungen, ausgewählt aus den Octylsilanen, den Vinylsilanen, den aminfunktionalisierten Silanen und/oder den Glycidyl-funktionalisierten Silanen, wie z. B. die Dynasylane der Fa. Evonik einsetzbar. Besonders bevorzugte Haftvermittler für Polyethylen (PE) und Polypropylen (PP) sind Vinyl-, Methyl- und Octylsilane, wobei eine ausschließliche Verwendung von Methylsilanen nicht optimal ist. Die Haftvermittler müssen dabei so ausgewählt werden, dass die Verfestigungstemperatur unterhalb des Schmelz- oder Erweichungspunktes des als Substrat eingesetzten Polymeren und unterhalb dessen Zersetzungstemperatur liegt. Als Haftvermittler sind insbesondere die in Tabelle 2 aufgeführten Silane einsetzbar. Bevorzugt weisen erfindungsgemäße Suspensionen sehr viel weniger als 25 Gew.-%, vorzugsweise weniger als 10 Gew.-% Verbindungen auf, die als Haftvermittler fungieren können.

**Tabelle 2**

| Polymer | Organofunktionstyp | Haftvermittler |
|---|---|---|
| PAN | Glycidyl | GLYMO |
| | Methacryl | MEMO |
| PA | Amino | AMEO, DAMO |
| PET | Methacryl | MEMO |
| | Vinyl | VTMO, VTEO, VTMOEO |
| PE, PP | Amino | AMEO, AMMO |
| | Vinyl | VTMO, VTEO, Silfin |
| | Methacryl | MEMO |

| | | |
|---|---|---|
| Mit: AMEO = 3-Aminopropyltriethoxysilan DAMO = 2-Aminoethyl-3-aminopropyltrimethoxysilan GLYMO = 3-Glycidyloxypropyltrimethoxysilan GLYEO = 3-Glycidyloxypropyltriethoxysilan MEMO = 3-methacryloxypropyltrimethoxysilan Silfin = Vinylsilan + Initiator + Katalysator VTEO = Vinyltriethoxysilan VTMO = Vinyltrimethoxysilan VTMOEO = Vinyltris(2-methoxyethoxy)silan | | |

Die durch das Aufbringen und Einbringen auf dem Substrat und in den Zwischenräumen des Substrats vorhandene Suspension kann z. B. durch Erwärmen auf 50 bis 350 °C verfestigt werden. Da bei der Verwendung polymerer Substratmaterialien die maximale Temperatur durch das Substratmaterial vorgegeben wird, ist diese entsprechend so anzupassen, dass das Substratmaterial nicht schmilzt oder erweicht. So wird je nach Ausführungsvariante des Verfahrens die auf und im Substrat vorhandene Suspension bevorzugt durch Erwärmen auf 100 bis 350 °C und ganz besonders bevorzugt durch Erwärmen auf 200 bis 280 °C verfestigt. Das Erwärmen der Suspension auf einem Polymervlies mit Fasern aus Polyester erfolgt vorzugsweise für 0,2 bis 10 Minuten bei einer Temperatur von 200 bis 220 °C. Das Erwärmen der Suspension auf einem Polymervlies mit Fasern aus Polyamid erfolgt vorzugsweise für 0,5 bis 10 Minuten bei einer Temperatur von 170 bis 200 °C. Das Erwärmen des Verbundes kann mittels erwärmter Luft, Heißluft, Infrarotstrahlung oder durch andere Erwärmungsmethoden nach dem Stand der Technik erfolgen.

Das Verfahren zur Herstellung von im erfindungsgemäßen Verfahren einsetzbaren Separatoren kann z. B. so durchgeführt werden, dass das Substrat von einer Rolle abgerollt wird, mit einer Geschwindigkeit von 1 m/h bis 2 m/s, vorzugsweise mit einer Geschwindigkeit von 0,5 m/min bis 20 m/min durch zumindest eine Apparatur, welche die Suspension auf und in das Substrat bringt, wie z. B. eine Walze, und zumindest eine weitere Apparatur, welche das Verfestigen der Suspension auf und in dem Substrat durch Erwärmen ermöglicht, wie z. B. ein elektrisch beheizter Ofen durchläuft und der so hergestellte Separator auf einer zweiten Rolle aufgerollt wird. Auf diese Weise ist es möglich, den Separator im Durchlaufverfahren herzustellen. Auch die Vorbehandlungsschritte können im Durchlaufverfahren unter Beibehaltung der genannten Parameter durchgeführt werden.

Die erfindungsgemäßen Separatoren bzw. die erfindungsgemäß hergestellten Separatoren können als Separator in Batterien, insbesondere als Separator in Lithiumionen-Batterien, vorzugsweise Lithium-Hochleistungs- und Hochenergiebatterien eingesetzt werden. Solche Lithium-Batterien können als Elektrolyten Lithiumsalze mit großen Anionen in Carbonaten als Lösemittel aufweisen. Geeignete Lithiumsalze sind z. B. LiClO₄, LiBF₄, LiAsF₆ oder LiPF₆, wobei LiPF₆ besonders bevorzugt ist. Als Lösemittel geeignete organische Carbonate sind z. B. Ethylencarbonat, Propylencarbonat, Dimethylcarbonat, Ethylmethylcarbonat oder Diethylcarbonat oder Mischungen davon.

Lithiumionen-Batterien, die einen erfindungsgemäßen Separator aufweisen, können insbesondere in Fahrzeugen, mit Elektroantrieb oder einer Hydbridantriebstechnik eingesetzt werden, wie z. B. Elektroautos oder Hybridautos.

### Vergleichsbeispiel: Separator nach dem Stand der Technik.

Zu 130 g Wasser und 15 g Ethanol wurden zunächst 30 g einer 5 Gew.-%igen, wässrigen HNO₃-Lösung, 10 g Tetraethoxysilan, 10 g Dynasilan AMEO und 10 g Dynasilan GLYMO (alle Silane: Evonik Degussa GmbH) gegeben. In diesem Sol, das zunächst für einige Stunden gerührt wurde, wurden dann jeweils 125 g der Aluminiumoxide Martoxid MZS-1 und Martoxid MZS-3 (beide Oxide von Martinswerk) suspendiert. Dieser Schlicker wurde für mindestens weitere 24 h mit einem Magnetrührer homogenisiert, wobei das Rührgefäß abgedeckt werden musste, damit es nicht zu einem Lösemittelverlust kam.

Ein 20 cm breites PET-Vlies (Freudenberg Vliesstoffe KG) mit einer Dicke von ca. 20 µm und einem Flächengewicht von etwa 10 g/m² wurde dann in einem kontinuierlichen Aufwalzverfahren (Bandgeschwindigkeit ca. 30 m/h, T = 200 °C) mit obigem Schlicker beschichtet. Man erhielt am Ende einen Separator mit einer mittleren Porenweite von 240 nm.

Anschließend wurde mittels eines Videokontrollsystems der Firma ISRA die Anzahl der Fehler in der Beschichtung pro Quadratmeter Fläche des Separators ermittelt. Die **Fig**. **1** zeigt diese Anzahl in den grauen Balken in Abhängigkeit von der Position der Videokamera, gemessen in der Breite der Separator Bahn in einem Bereich von 0 bis 100 cm Breite in Abschnitten von jeweils 10 cm. Die über die Position der Videokontrolle errechnete mittlere Anzahl der Fehler betrug etwa 5 m⁻² Separatorfläche.

Die Untersuchung der Anwendbarkeit des wie geschildert hergestellten keramischen Kompositmaterials erfolgte durch Bau einer elektrochemischen Zelle in Gestalt einer Lithium-Ionen-Flachbatterie. Die Batterie bestand aus einer Positiv-Masse (LiCoO2), einer Negativ-Masse (Graphit) und einem Elektrolyten aus 1 mol/L LiPF6 in Ethylencarbonat/Dimethylcarbonat (Gewichtsverhältnis 1:1). Zur Herstellung der Elektroden wird Positiv- (3% Ruß (Fa. Timcal, Super P), 3% PVdF (Fa. Arkema, Kynar 761), 50% N-Methylpyrrolidon) bzw. Negativ-Masse (1% Ruß (Fa. Timcal, Super P), 4% PVdF (Fa. Arkema, Kynar 761), 50% Methylpyrrolidon) in einer Schichtdicke von 100 µm auf Aluminium- (Fa. Tokai, 20 µm) bzw. Kupferfolie (Fa. Microhard, 15 µm) aufgerakelt und bis zur Gewichtskonstanz bei 110 °C getrocknet. Das keramische Kompositmaterial gemäß dem Stand der Technik bzw. gemäß unten geschildertem Beispiel wurde als Separator zwischen den Elektroden der Batterie verwendet. Die Batterie lief jeweils stabil über mehr als 550 Zyklen.

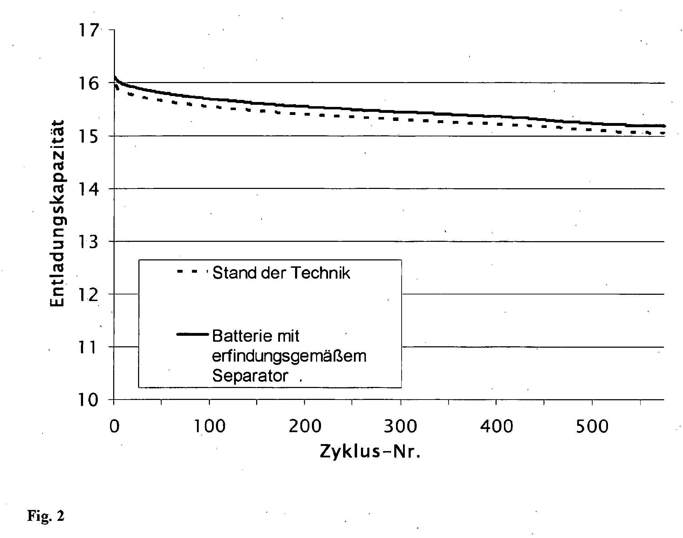

Anschließend wurde die Entladungskapazität dieser Zelle als Funktion der Zyklus-Nr. gemessen. Ihr Verlauf ist in der Fig. 2 mit der gepunkteten Linie dargestellt.

### Beispiel: Separator mit Additiv.

Es wurde eine Suspension angesetzt, wie im Vergleichsbeispiel. Im Unterschied dazu wurde jedoch in den dann erhaltenen Schlicker als Additiv 2 Gew-% beta-Cyclodextrin eingerührt. Dieser Schlicker wurde für mindestens weitere 24 h mit einem Magnetrührer homogenisiert, wobei das Rührgefäß abgedeckt werden musste, damit es nicht zu einem Lösemittelverlust kam.

Ein 20 cm breites PET-Vlies (Freudenberg Vliesstoffe KG) mit einer Dicke von ca. 20 µm und einem Flächengewicht von etwa 10 g/m² wurde dann in einem kontinuierlichen Aufwalzverfahren (Bandgeschwindigkeit ca. 30 m/h, T = 200 °C) mit obigem Schlicker beschichtet. Man erhielt am Ende einen Separator mit einer mittleren Porenweite von 240 nm.

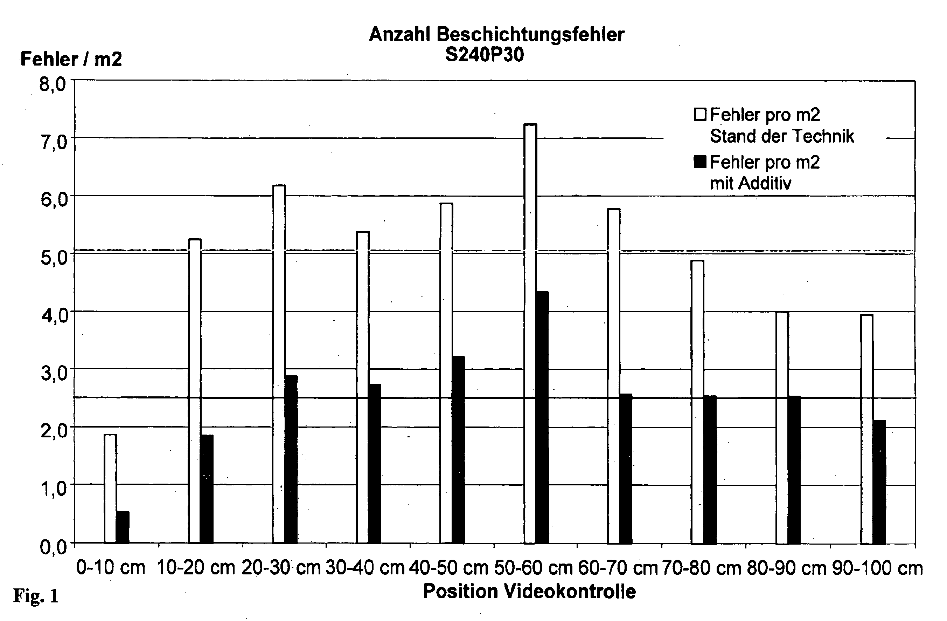

Die mit dem Videokontrollsystem ermittelte Anzahl der Fehler in der Beschichtung pro Quadratmeter Fläche des Separators zeigt die **Fig. 1** mit schwarzen Balken. Durch das Additiv ist die Anzahl der Fehler in der Beschichtung beim erfindungsgemäßen Separator bei jeder Position der Videokontrolle deutlich reduziert, und die errechnete mittlere Anzahl der Fehler pro m² Separatorfläche war gegenüber dem Wert beim Stand der Technik gemäßen Separator um etwa die Hälfte reduziert.

Der erfindungsgemäße Separator wurde in eine elektrochemische Zelle eingebaut, deren Aufbau mit Ausnahne des Separators wie im Vergleichsbeispiel war. Den Verlauf der Entladungskapazität in mAh als Funktion der Zyklus-Nr. zeigt die **Fig. 2** mit der durchgezogenen Linie.

## Patentansprüche

1. Separator zur Verwendung in einer Batterie, der auf einem Substrat und in den Zwischenräumen des Substrats, welches Fasern aus einem elektrisch nicht leitendem Material aufweist, eine poröse, nicht elektrisch leitfähige Beschichtung aus durch einen anorganischen Kleber miteinander und mit dem Substrat verklebten Oxidpartikeln, die zumindest ein Oxid, ausgewählt aus Al₂O₃, SiO₂ aufweisen, aufweist,
**dadurch gekennzeichnet,**
**dass** in der keramischen Beschichtung zumindest ein Zucker vorhanden ist, wobei der Zucker ausgewählt ist aus Polyhydroxyaldehyden, Polyhydroxyketonen, linearen oder zyklischen Monosacchariden, linearen oder zyklischen Polysacchariden.

2. Separator nach Anspruch 1, wobei der Zucker ein zyklischer Zucker ist, der von 6 bis 8 Glucoseeinheiten aufweist, bevorzugt Cyclodextrin, wobei der Separator auf zumindest einer Seite eine Anzahl Fehler von höchstens 4,5 m⁻² aufweist

3. Verfahren zur Herstellung eines Separators gemäß zumindest einem der Ansprüche 1 oder 2,
**dadurch gekennzeichnet,**
**dass** ein Substrat, welches Fasern aus einem elektrisch nicht leitenden Material und Zwischenräume zwischen den Fasern aufweist, mit einer keramischen Beschichtung versehen wird, wofür auf und in das Substrat eine Suspension aufgebracht wird und diese durch zumindest einmaliges Erwärmen auf und im Substrat verfestigt wird, wobei die Suspension
ein Sol, enthaltend in dem Sol dispergierte Oxid partikel, ausgewählt aus den Oxiden der Elemente Al und/oder Si,
zumindest ein Silan,
zumindest ein Dispersionsmittel, und
zumindest einen Zucker
aufweist, wobei wobei der Zucker ausgewählt ist aus Polyhydroxyaldehyden, Polyhydroxyketonen, linearen oder zyklischen Monosacchariden, linearen oder zyklischen Polysacchariden.

4. Verfahren nach Anspruch 3,
**dadurch gekennzeichnet,**
**dass** zyklischer und/oder nicht-zyklischer Zucker eingesetzt wird, der vorzugsweise von 6 bis 8 Glucoseeinheiten aufweist, besonders bevorzugt Cyclodextrin, oder ein Gemisch dieser Zucker.

5. Verwendung eines Separators gemäß zumindest einem der Ansprüche 1 oder 2 als Separator in Batterien.

6. Lithiumionen-Batterie, einen Separator gemäß zumindest einem der Ansprüche 1 oder 2 aufweisend.

7. Traktionssystem, eine Lithiumionen-Batterie gemäß Anspruch 6 aufweisend.

## Claims

1. Separator for use in a battery, which comprises on a substrate and within the interstitials of the substrate, which comprises fibers of an electrical non-conducting material, a porous, electrical non-conducting coating of oxide particles, which are adhered to each other and adhered to the substrate by an inorganic adhesive, wherein the oxide particles comprise at least an oxide selected from Al₂O₃, SiO₂,
**characterized in that**
in the ceramic coating at least one sugar is present, wherein the sugar is selected from polyhydroxyaldehydes, polyhydroxyketones, linear or cyclic monosaccharides, linear or cyclic polysaccharides.

2. Separator according to claim 1, wherein the sugar is a cyclic sugar comprising from 6 to 8 glucose units, preferably cyclodextrine, wherein the separator comprises on at least one side a number of defects of at most 4,5 m⁻².

3. Method for manufacturing a separator according to at least one of claims 1 or 2,
**characterized in that**
a substrate, which comprises fibers of an electrical non-conductive material and which comprises interstitials between the fibers, is provided with a ceramic coating wherefore onto and into the substrate a suspension is supplied and wherein the suspension is solidified on and in the substrate by at least one-time heating, wherein the suspension comprises
a sol, comprising therein dispersed oxide particles, selected from the oxides of the elements Al and/or Si,
at least a silane,
at least a dispersion agent, and
at least a sugar,
wherein the sugar is selected from polyhydroxyaldehydes, polyhydroxyketones, linear or cyclic monosaccharides, linear or cyclic polysaccharides.

4. Method of manufacturing according to claim 3,
**characterized in that**
a cyclic and/or non-cyclic sugar is used, which preferably comprises from 6 to 8 glucose units, particularly preferred cyclodextrine, or a mixture of these sugars.

5. Use of a separator according to at least one of the claims 1 or 2 as separator in batteries.

6. Lithium-ion battery comprising a separator according to at least one of the claims 1 or 2.

7. Traction system comprising a lithium-ion battery according to claim 6.

## Revendications

1. Séparateur à utiliser dans une batterie, qui présente sur un substrat et dans les interstices du substrat, qui présente des fibres en un matériau non conducteur de l'électricité, un revêtement poreux non conducteur de l'électricité en particules d'oxydes collées les unes aux autres et au substrat au moyen d'une colle minérale, qui présentent au moins un oxyde, choisi parmi Al₂O₃, SiO₂, **caractérisé en ce qu'**il se trouve au moins un sucre dans le revêtement céramique, dans lequel le sucre est choisi parmi les polyhydroxyaldéhydes, les polyhydroxycétones, les monosaccharides linéaires ou cycliques, les polysaccharides linéaires ou cycliques.

2. Séparateur selon la revendication 1, dans lequel le sucre est un sucre cyclique, qui présente de 6 à 8 unités de glucose, de préférence de la cyclodextrine, dans lequel le séparateur présente sur au moins un côté un nombre de défauts au maximum de 4,5 m⁻².

3. Procédé de fabrication d'un séparateur selon au moins une des revendications 1 ou 2, **caractérisé en ce que** l'on munit un substrat, qui présente des fibres en un matériau non conducteur de l'électricité et des interstices entre les fibres, d'un revêtement céramique, pour lequel on dépose une suspension sur et dans le substrat et on consolide celle-ci sur et dans le substrat par au moins une phase de chauffage, dans lequel la suspension présente
un sol, contenant des particules d'oxydes dispersées dans le sol, choisies parmi les oxydes des éléments Al et/ou Si,
au moins un silane,
au moins un agent dispersant, et
au moins un sucre,
dans lequel le sucre est choisi parmi les polyhydroxyaldéhydes, les polyhydroxycétones, les monosaccharides linéaires ou cycliques, les polysaccharides linéaires ou cycliques.

4. Procédé selon la revendication 3, **caractérisé en ce que** l'on utilise un sucre cyclique et/ou non cyclique, qui présente de préférence de 6 à 8 unités de glucose, de préférence en particulier de la cyclodextrine, ou un mélange de ces sucres.

5. Utilisation d'un séparateur selon au moins une des revendications 1 ou 2 comme séparateur dans des batteries.

6. Batterie au lithium-ions, présentant un séparateur selon au moins une des revendications 1 ou 2.

7. Système de traction, présentant une batterie au lithium-ions selon la revendication 6.
